# EUROPEAN PATENT APPLICATION

(11) **EP 3 734 074 A1**
(43) Date of publication of application: **04.11.2020**
(21) Application number: 18896787.1
(22) Date of filing: 19.12.2018
(51) Int. Cl.: F04B 41/02, F04B 39/12

(54) **GAS INLET AND STORAGE TANK FOR FOUR-CYLINDER ELECTRIC AIR COMPRESSOR, AND FOUR-CYLINDER ELECTRIC AIR COMPRESSOR**

(30) Priority: 28.12.2017 CN 201721893157 U; 24.04.2018 CN 201810370451
(71) Applicant: Wabco (China) Co., Ltd., Qingdao, Shandong 266510 (CN)
(72) Inventor: YUAN, Haiqiang, Qingdao, Shandong 266510 (CN); ARUMUGHAM, Ganesamoorthy, Qingdao, Shandong 266510 (CN)
(74) Representative: Bandpay & Greuter
(86) International application number: PCT/CN2018/122178
(87) International publication number: WO 2019/128815

(57) **Abstract**

Provided are an inlet air storage tank for a four-cylinder electric air compressor and a four-cylinder electric air compressor, wherein the inlet air storage tank for a four-cylinder electric air compressor includes a tank body, the tank body includes an inlet air tank body and an air distributing tank bodies located at front and rear ends of the inlet air tank body, the inlet air tank body is in communication with two air distributing tank bodies, an air inlet is disposed on an upper surface of the inlet air tank body, and an air discharge branch is connected at both sides of the air distributing tank body respectively. The following beneficial effects are achieved: effectively buffering filtered air, uniformly and efficiently distributing air to each cylinder block, reducing a working noise, optimizing an arrangement of the electric air compressor and simplifying an assembly of the electric air compressor.

## Description

### TECHNICAL FIELD

The present disclosure belongs to the technical field of electric air compressors, and in particular to an inlet air storage tank for a four-cylinder electric air compressor and a four-cylinder electric air compressor.

### BACKGROUND

With rapid development of new energy vehicles, each assembly has to be made economical so as to save energy for the vehicle. Pure electric vehicles adopt electric air compressors. During operation of the vehicle, after a braking pipe pressure reaches an unloading pressure of an air dryer, the air compressor is stopped; when the braking pipe pressure drops to a set lower limit value over use, the air compressor is restarted. In this way, the operation economy is realized.

Air suction of the existing electric air compressor is accomplished in the following manner: external air directly enters an inlet pipe through an air filter, and then into each inlet cavity of the electric air compressor. When the filtered air directly enters the inlet cavity of the electric air compressor through the inlet pipe, the following major problems will occur: a phenomenon of non-uniform air distribution is easily caused since the air directly enters each inlet cavity of the electric air compressor through the inlet pipe; noise is easy to produce due to no buffer; pipes and joints are mostly connected in a threaded or sleeved manner, resulting in tedious connection and poor aesthetics; the inlet pipes are usually made of metal material, bringing about cumbersomeness.

In addition, the existing electric air compressors are mostly rated at IP65, thus the rating is relatively low. The existing electric air compressor is driven by a three-phase alternating-current asynchronous motor which is high in noise. A cylinder bore of the existing air compressor is about 85 mm. Such air compressor features large size, large weight, high noise, and large installation space. In addition, the existing air compressor requires supply of coolant from the vehicle due to no capability to provide independent cooling.

Therefore, the prior art is to be further improved and enhanced.

### SUMMARY

### Technical Problem

### Solutions to Problems

### Technical Solutions

To solve the shortcomings of the prior art described above, the present disclosure provides an inlet air storage tank for a four-cylinder electric air compressor and a four-cylinder electric air compressor to effectively buffer filtered air, uniformly and efficiently distribute air to each cylinder block, reduce a working noise, optimize an arrangement of the electric air compressor and simplify an assembly of the electric air compressor.

The present disclosure provides an inlet air storage tank for a four-cylinder electric air compressor, including a tank body, where the tank body includes an inlet air tank body and air distributing tank bodies located at front and rear ends of the inlet air tank body, the inlet air tank body is in communication with two air distributing tank bodies, an air inlet is disposed in an upper surface of the inlet air tank body, and air discharge branches are connected at both sides of the air distributing tank body.

Further, two air distributing tank bodies are symmetrically arranged at front and rear ends of the inlet air tank body, two air discharge branches on the same air distributing tank body are symmetrically arranged, and the distances of the air inlet from the four air discharge branches are same.

Further, several assembly lugs are disposed at the left and right sides of the inlet air tank body respectively, and a bolt hole is opened on the assembly lug.

Further, an annular groove for assembling an O-shaped ring is disposed at an end of the air discharge branch.

Further, at least one return air orifice is disposed on a lower surface of the tank body.

Further, the tank body and the air discharge branch are integrally formed, connection portions of the inlet air tank body and two air distributing tank bodies are transitioned in an arc shape, and the tank body is presented in an integral shape in which the inlet air tank body narrows toward the air distributing tank body.

Further, the tank body and the air discharge branch are both made of high-strength plastic.

The present disclosure further provides a four-cylinder electric air compressor, including a motor, a left cylinder block and a right cylinder block, and the inlet air storage tank for a four-cylinder electric air compressor described above. The motor is disposed between the left and right cylinder blocks, the inlet air storage tank for a four-cylinder electric air compressor is disposed above the motor, two cylinder heads are disposed at top ends of the left and right cylinder blocks respectively, and the two cylinder heads at the top end of the left cylinder block are arranged in a V-shape and the two cylinder heads at the top end of the right cylinder block are also arranged in a V-shape; an inlet port is disposed on each cylinder head and assembly-connected to the air discharge branch of the inlet air storage tank for a four-cylinder electric air compressor; a crankshaft, a first connecting rod, a second connecting rod, a first piston and a second piston are all disposed within each of the left and right cylinder blocks, one end of the first connecting rod is sleeved on the crankshaft, the other end of the first connecting rod is connected with the first piston, one end of the second connecting rod is sleeved on the crankshaft, and the other end of the second connecting rod is connected with the second piston; the motor is a dual output shaft motor, the crankshafts within the left and right cylinder blocks are driven by two output shafts of the motor to rotate respectively, and the crankshaft rotates to drive the first and second connecting rods to perform cycloidal motion and further drive the first and second pistons to perform reciprocating linear motion so as to realize air suction and discharge of the cylinder head.

Further, an air outlet is further disposed on each cylinder head, the four-cylinder electric air compressor further includes an air discharge pipe, one end of the air discharge pipe is in communication with the air outlet of the cylinder head, and the other end of the air discharge pipe is connected to an air channel of the vehicle.

Further, the four-cylinder electric air compressor includes two electronic fans for reducing temperatures of the cylinder heads, where one electronic fan is located at an outer side of the left cylinder block and between the two cylinder heads of the left cylinder block, and the other electronic fan is located at an outer side of the right cylinder block and between the two cylinder heads of the right cylinder block.

### Beneficial Effects of The Invention

### Beneficial Effects

By adopting the above technical solutions, the present disclosure achieves the following beneficial effects.
1. The inlet air storage tank of the present disclosure buffers the incoming air, and uniformly distributes the incoming air to four cylinder heads, thereby reducing a negative pressure of the incoming air, decreasing oil carryover, lowering the noise of the electric air compressor, and avoiding pressure fluctuation generated by working of the piston.
2. The inlet air storage tank of the present disclosure is integrally formed by high-strength plastic to facilitate moulding production. Thus, a product weight is reduced while an overall strength is guaranteed; the inlet air storage tank and four air discharge branches are integrally designed to simplify the inlet pipe, and reduce an installation space, thereby achieving easier installation and a simpler external appearance. Further, the use of components such as pipes and clamps is reduced and the assembly efficiency is improved.
3. In the present disclosure, two cylinder heads on the same cylinder block are disposed in a V-shape to optimize an overall arrangement of the electric air compressor. The entire air compressor is designed in a split type, simplifying assembly procedures and improving the assembly efficiency.
4. The left and right cylinder blocks of the present disclosure are made of an aluminum material, the weight is greatly reduced, the size of the cylinder bore is decreased, and the overall dimension becomes small, thereby saving the installation space.
5. In the present disclosure, the output shaft of the motor and the crankshaft are directly connected by key connection without a coupler; further, the motor is a permanent magnet synchronous motor, greatly reducing noise during the operation. In addition, a damping pad is disposed at a bottom end of the installation bracket of each cylinder block, further reducing a vibration noise during the operation.
6. In the present disclosure, the electronic fan is adopted to lower the temperature of each cylinder head, so that the electric air compressor in the present disclosure has the independent cooling capability. In addition, in the present disclosure, the change of the connection manner of the inlet pipe and the air discharge pipe greatly increases the IP rating of the electric air compressor in the present disclosure.

### BRIEF DESCRIPTION OF THE DRAWINGS

### Description of Drawings

FIG. 1 is an overall assembly view of a four-cylinder electric air compressor according to an embodiment of the present disclosure.
FIG. 2 is a half-sectional view of a left cylinder block or a right cylinder block in a four-cylinder electric air compressor according to an embodiment of the present disclosure.
FIG. 3 is an axonometric view of a left cylinder block or a right cylinder block in a four-cylinder electric air compressor according to an embodiment of the present disclosure.
FIG. 4 is an exploded view of a cylinder head in a four-cylinder electric air compressor according to an embodiment of the present disclosure.
FIG. 5 is a partial assembly view in a four-cylinder electric air compressor according to an embodiment of the present disclosure.
FIG. 6 is a first perspective view of an inlet air storage tank according to an embodiment of the present disclosure.
FIG. 7 is a second perspective view of an inlet air storage tank according to an embodiment of the present disclosure.
FIG. 8 is a first sectional view of an inlet air storage tank along a longitudinal direction according to an embodiment of the present disclosure.
FIG. 9 is a sectional view of an inlet air storage tank along a horizontal direction according to an embodiment of the present disclosure.
FIG. 10 is a second sectional view of an inlet air storage tank along a longitudinal direction according to an embodiment of the present disclosure.
FIG. 11 is a sectional view of a position A in FIG. 10 according to an embodiment of the present disclosure.

Numerals of the drawings are described as follows:
1. left cylinder block, 2. right cylinder block, 3. motor, 4. inlet air storage tank, 41. inlet air tank body, 42. air distributing tank body, 43. air inlet, 44. air discharge branch, 45. return air orifice , 46. assembly lug, 47. annular groove, 5. electronic fan, 6. cylinder head, 61. cylinder cover, 62. sealing gasket, 63. discharge valve plate, 64. inlet valve plate, 65. cylinder liner, 7. inlet port, 8. air discharge pipe, 9. installation bracket, 10. damping pad, 11. crankshaft, 12. first connecting rod, 13. first piston, 14. second connecting rod, and 15. second piston.

### DETAILED DESCRIPTION OF THE EMBODIMENTS

### Embodiment of The Invention

The present disclosure is further described in detail below in combination with accompanying drawings and specific embodiments, but the present disclosure is not limited to these embodiments.

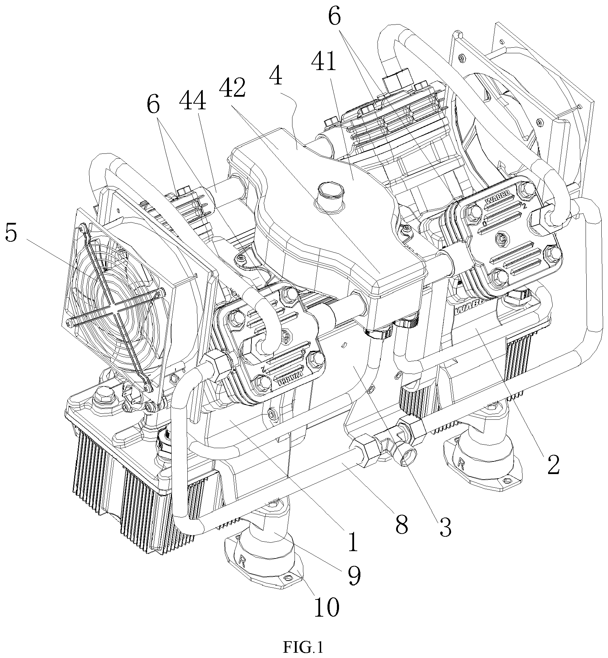

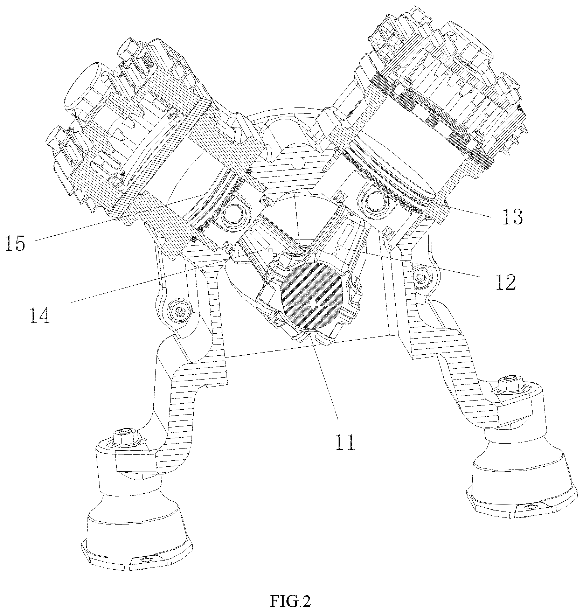

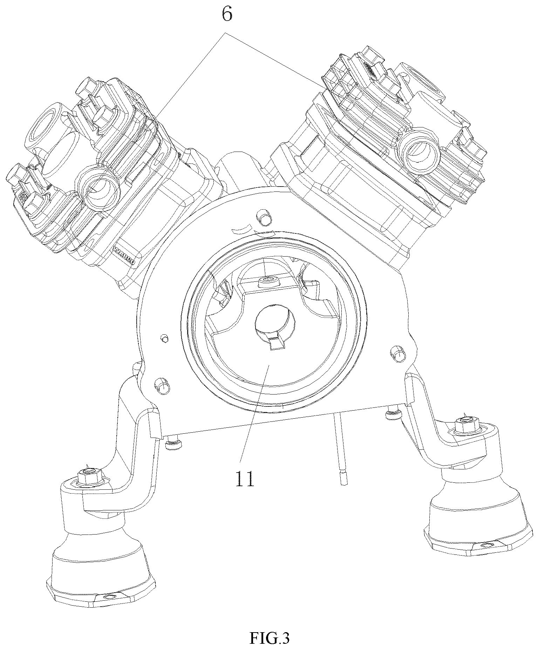

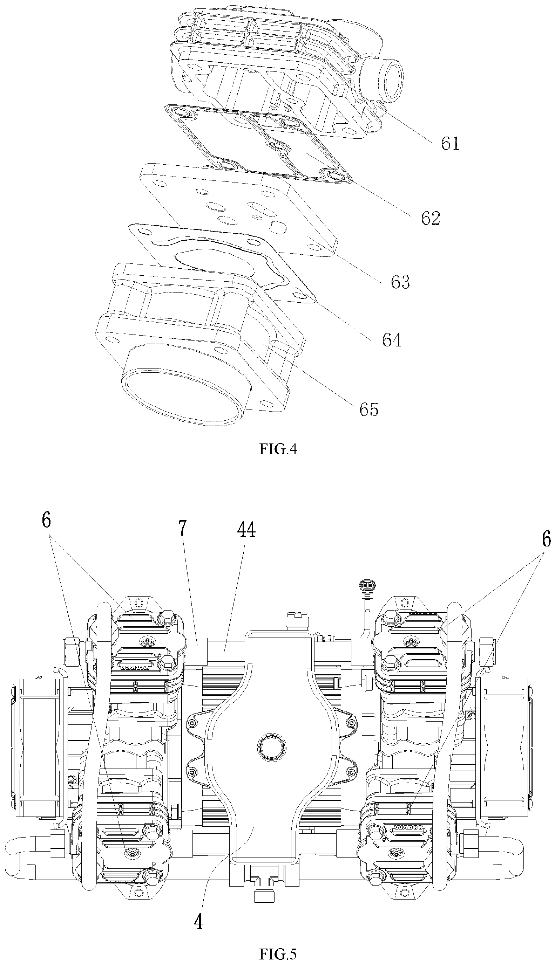

As shown in FIGS. 1-5, a four-cylinder electric air compressor includes a motor 3, a left cylinder block 1 and a right cylinder block 2, and the motor 3 is disposed between the left and right cylinder blocks. The left and right cylinder blocks are both made of an aluminum material, reducing an overall weight thereof.

Installation brackets 9 are disposed at bottom ends of the left and right cylinder blocks, and a damping pad 10 is disposed at a bottom end of each installation bracket 9.

Two cylinder heads 6 are disposed at top ends of the left and right cylinder blocks respectively, and two cylinder heads 6 at the top end of the left cylinder block 1 are arrange in a V-shape and two cylinder heads 6 at the top end of the right cylinder block 2 are also arranged in a V-shape. Each cylinder head 6 includes a cylinder cover 61, a sealing gasket 62, a discharge valve plate 63, an inlet valve plate 64 and a cylinder liner 65 which are sequentially disposed from top to bottom, and the cylinder liners 65 of the cylinder heads 6 are connected with the left cylinder block 1 and the right cylinder block 2 respectively. An inlet port 7 is disposed on each cylinder head 6, and is used to assembly-connect with the air discharge branch 44.

A crankshaft 11, a first connecting rod 12, a second connecting rod 14, a first piston 13 and a second piston 15 are all disposed within each of the left and right cylinder blocks. One end of the first connecting rod 12 is sleeved on the crankshaft 11, the other end of the first connecting rod 12 is connected with the first piston 13, one end of the second connecting rod 14 is sleeved on the crankshaft 11, and the other end of the second connecting rod 14 is connected with the second piston 15.

The motor 3 is a dual output shaft motor, and the motor 3 is a permanent magnet synchronous motor. The crankshafts 11 within the left and right cylinder blocks are driven by two output shafts of the motor 3 to rotate respectively. The output shaft of the motor 3 and the crankshaft 11 are connected by key connection.

The crankshaft 11 rotates to drive the first and second connecting rods to perform a cycloidal motion and further drive the first and second pistons to perform a reciprocating linear motion so as to realize air suction and discharge of the cylinder head 6. Specifically, when the first piston 13 and the second piston 15 move down, the inlet valve plate 64 is opened, the discharge valve plate 63 is closed, and the air compressor performs an air suction process; when the first piston 13 and the second piston 15 move up, the inlet valve plate 64 is closed, the discharge valve plate 63 is opened, and the air compressor performs an air compression process to compress the air sucked in the above suction process and then discharge the air to an air channel of a vehicle.

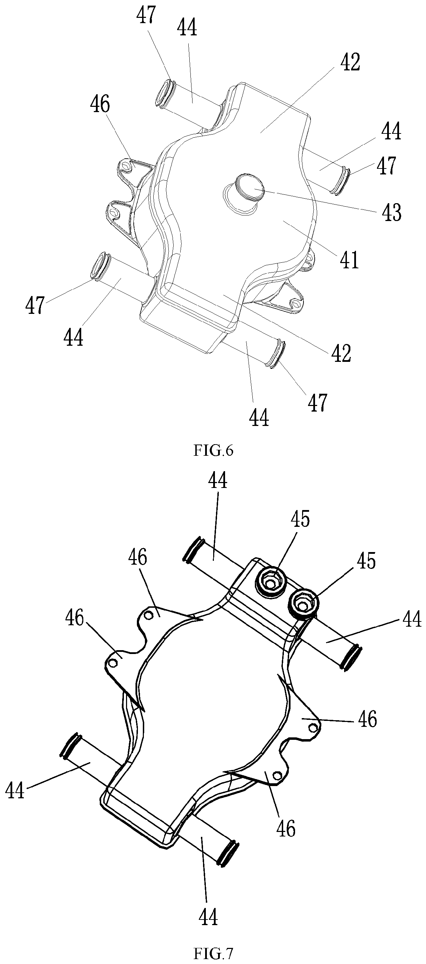

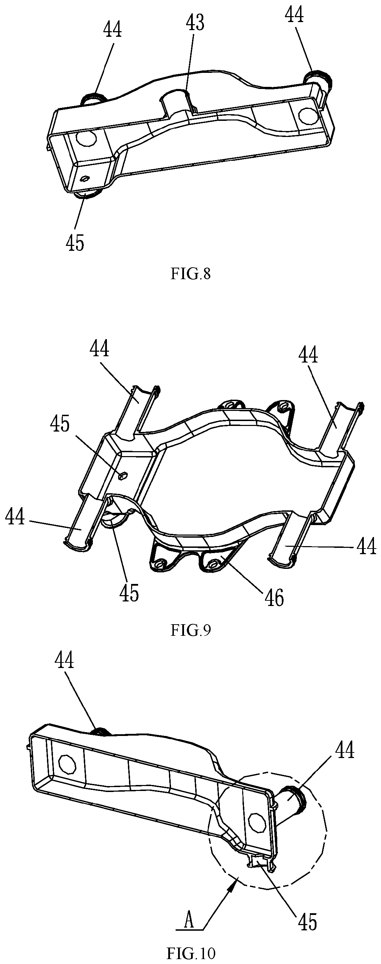

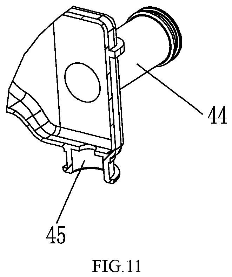

As shown in FIGS. 6-11, the four-cylinder electric air compressor of this embodiment further includes an inlet air storage tank 4. The air inlet storage tank 4 includes an inlet air tank body 41 and two air distributing tank bodies 42, and the two air distributing tank bodies 42 are symmetrically disposed at front and rear ends of the inlet air tank body 41. The inlet air tank body 41 is in communication with the two air distributing tank bodies 42, and the inlet air storage tank 4 is in an integral shape that the inlet air tank body 41 narrows toward the air distributing tank bodies 42. Connection portions of the inlet air tank body 41 and the two air distributing tank bodies 42 are transitioned in an arc shape, so that an air flow entering the inlet air tank body 41 can be smoothly transported to each air distributing tank body 42, thereby reducing the noise. An air inlet 43 is disposed on an upper surface of the inlet air tank body 41. Air discharge branches 44 are connected at both sides of the air distributing tank body 42, and two air discharge branches 44 on the same air distributing tank body 42 are symmetrically arranged. The distances of the air inlet 43 from the four air discharge branches are same to facilitate uniform and sufficient air distribution of the inlet air storage tank 4.

In the four-cylinder electric air compressor of this embodiment, the air inlet 43 of the inlet air storage tank 4 is connected to an air filter of the vehicle. Air filtered by the air filter firstly enters the inlet air tank body 41 via the air inlet 43, the incoming air is buffered in the inlet air tank body 41, and then distributed to the inlet ports 7 on four cylinder heads 6 of the electric air compressor uniformly through the four symmetrical air discharge branches 44 of the air distributing tank bodies 42 on both sides of the inlet air tank body 41. The four symmetrical air discharge branches 44 are in direct communication with the four cylinder heads 6 of the electric air compressor and can distribute the air uniformly and efficiently so as to realize the air suction process of the electric air compressor. The inlet air storage tank 4 can uniformly distribute the incoming air to the four cylinder heads 6 of the four-cylinder electric air compressor, thereby decreasing the negative pressure of the incoming air and facilitating reducing oil carryover. Further, this designing manner decreases suction frequency and reduces the suction noise.

During the reciprocating motion of the first piston 13 and the second piston 15 of the electric air compressor, an air volume within the cylinder head 6 will be changed, and an air volume within the inlet air storage tank 4 is further changed, thereby generating pressure fluctuation. To avoid such pressure fluctuation, several return air orifices 45 are disposed on a lower surface of the inlet air storage tank 4. In this embodiment, two return air orifices 45 are disposed at one side of the lower surface of one air distributing tank body 42 and communicated with the left cylinder block 1 and the right cylinder block 2 respectively through an independent pipe. The four-cylinder electric air compressor of this embodiment not only realizes the functions that a traditional pipe design has, but also effectively buffers the air through an overall symmetrical structure, thereby reducing the noise of the electric air compressor and efficiently and uniformly distributing the air entering the cylinder heads 6 of the electric air compressor.

The inlet air storage tank 4 effectively buffers the air and reduces the working noise by replacing a traditional three-way joint. The noise reduction principle thereof is as follows: the four-cylinder electric air compressor does not simply suck an air flow of stable pressure from the outside; since each cylinder head 6 can generate air flow fluctuation in the air suction process, the air flow fluctuation in an air suction system of the four-cylinder electric air compressor is extremely complex. In the air suction process, due to a suction effect of the piston, a negative pressure wave is formed at the inlet port 7 on the cylinder head 6, and a noise generated due to friction between the piston and an inner wall of the cylinder head 6 will also be emitted through the incoming air. The inlet air storage tank 4 buffers the negative pressure wave formed by the incoming air pressure to reduce the pressure fluctuation and buffer the noise, thereby reducing the noises generated by the incoming air and the piston motion.

In this embodiment, the inlet air storage tank 4, the inlet air tank body 41, the air distributing tank body 42 and the air discharge branches 44 are integrally formed by high-strength plastic. The inlet air storage tank 4 of this embodiment facilitates moulding production. In this case, the product weight is reduced with the overall strength being guaranteed, which satisfies requirements of vehicle-mounted systems for safety, light weight and compactness of components. The integral design of the inlet air storage tank 4 and the four air discharge branches 44 simplifies the inlet pipe, reduces the installation space, and achieves the easier installation and the simpler external appearance. An annular groove 47 for assembling an O-shaped ring is disposed at an end of the air discharge branch 44. The O-shaped ring is embedded into the annular groove 47 of the air discharge branch 44 so that the air discharge branch 44 is directly clamped to the inlet port 7 on the cylinder head 6, thereby reducing the use of components such as pipes and clamps and improving the assembly efficiency of the inlet air storage tank 4. Two assembly lugs 46 are disposed at each of the left and right sides of the lower surface of the inlet air tank body 41, and a bolt hole is opened on the assembly lug 46. The inlet air storage tank 4 is assembled onto an outer housing of the motor 3 through the bolts and the assembly lugs 46.

An air outlet is further disposed on each of the cylinder heads 6 respectively. The four-cylinder electric air compressor further includes an air discharge pipe 8, one end of the air discharge pipe 8 is in communication with the air outlet of the cylinder head 6, and the other end of the air discharge pipe 8 is connected to an air channel of the vehicle. The air discharge pipe 8 is made of a copper pipe, and sealing between the air discharge pipe 8 and the air outlet of the cylinder head 6 is achieved by gluing. The sealing of the joints of the motor is also achieved by gluing. The change of the connection manner of each joint improves the IP rating of the electric air compressor in the present disclosure to IP67.

By using the above four-cylinder electric air compressor, the air flows through the air filter of the vehicle and then enters the inlet air storage tank 4, the inlet air storage tank 4 distributes the air to the four cylinder heads 6 of the air compressor, and then, the pistons within the cylinder heads 6 perform reciprocating motion under the actions of the motor 3, the crankshafts 11 and the connecting rods respectively. In the operation process, when the pistons move down, the cylinder head 6 sucks the air; when the pistons move up, the air compressor performs a compression process to compress the air sucked in the suction process and then discharge the air to the air channel of the vehicle, and the air is finally stored in an air storage tank of the vehicle for later use.

The four-cylinder electric air compressor further includes two electronic fans 5 for reducing temperatures of the cylinder heads 6, where one electronic fan 5 is located at an outer side of the left cylinder 1 and between two cylinder heads 6 of the left cylinder block 1, and the other electronic fan 5 is located at an outer side of the right cylinder block 2 and between two cylinder heads 6 of the right cylinder block 2. The arrangement of the electronic fans 5 enables the electric air compressor to have an independent cooling capability.

Parts unmentioned in the present disclosure may be realized by adopting or referring to the prior art.

Specific embodiments described herein are merely exemplary of the spirit of the present disclosure. Persons skilled in the art may make various modifications or supplementations or substitutions in a similar manner to the described specific embodiments without departing from the spirit of the present disclosure or surpassing the scope defined by the appended claims.

## Claims

1. An inlet air storage tank for a four-cylinder electric air compressor, comprising a tank body, wherein the tank body comprises an inlet air tank body and air distributing tank bodies located at front and rear ends of the inlet air tank body, the inlet air tank body is in communication with two air distributing tank bodies, an air inlet is disposed on an upper surface of the inlet air tank body, and an air discharge branch is connected at both sides of the air distributing tank body respectively.

2. The inlet air storage tank for a four-cylinder electric air compressor according to claim 1, wherein the two air distributing tank bodies are symmetrically disposed at front and rear ends of the inlet air tank body, two air discharge branches on the same air distributing tank body are symmetrically disposed, and distances of the air inlet from four air discharge branches are same.

3. The inlet air storage tank for a four-cylinder electric air compressor according to claim 1, wherein several assembly lugs are disposed at left and right sides of the inlet air tank body, and a bolt hole is opened on the assembly lug.

4. The inlet air storage tank for a four-cylinder electric air compressor according to claim 1, wherein an annular groove for assembling an O-shaped ring is disposed at an end of the air discharge branch.

5. The inlet air storage tank for a four-cylinder electric air compressor according to claim 1, wherein at least one return air orifice is disposed on a lower surface of the tank body.

6. The inlet air storage tank for a four-cylinder electric air compressor according to claim 1, wherein the tank body and the air discharge branches are integrally formed, connection portions of the inlet air tank body and two air distributing tank bodies are transitioned in an arc shape, and the tank body is in an integral shape that the inlet air tank body narrows toward the air distributing tank bodies.

7. The inlet air storage tank for a four-cylinder electric air compressor according to claim 1, wherein the tank body and the air discharge branches are made of high-strength plastic.

8. A four-cylinder electric air compressor, comprising a motor, a left cylinder block and a right cylinder block, and further comprising the inlet air storage tank for a four-cylinder electric air compressor according to any one of claims 1-7, wherein the motor is disposed between the left and right cylinder blocks, the inlet air storage tank for a four-cylinder electric air compressor is disposed above the motor, two cylinder heads are disposed at top end of each of the left and right cylinder blocks respectively, two cylinder heads at the top end of the left cylinder block are arranged in a V-shape and two cylinder heads at the top end of the right cylinder block are also arranged in a V-shape, and an inlet port is disposed on each cylinder head and assembly-connected to the air discharge branch of the inlet air storage tank for the four-cylinder electric air compressor, a crankshaft, a first connecting rod, a second connecting rod, a first piston and a second piston are all disposed within each of the left and right cylinder blocks, one end of the first connecting rod is sleeved on the crankshaft, the other end of the first connecting rod is connected with the first piston, one end of the second connecting rod is sleeved on the crankshaft, and the other end of the second connecting rod is connected with the second piston; the motor is a dual output shaft motor, the crankshafts within the left and right cylinder blocks are driven by two output shafts of the motor to rotate respectively, and the crankshaft rotates to drive the first and second connecting rods to perform a cycloidal motion and further drive the first and second pistons to perform a reciprocating linear motion so as to realize air suction and air discharge of the cylinder head.

9. The four-cylinder electric air compressor according to claim 8, wherein an air outlet is further disposed on each cylinder head respectively, the four-cylinder electric air compressor further comprises an air discharge pipe, one end of the air discharge pipe is connected with the air outlet of the cylinder head, and the other end of the air discharge pipe is connected to an air channel of a vehicle.

10. The four-cylinder electric air compressor according to claim 8, further comprising two electronic fans for reducing temperatures of the cylinder heads, wherein one electronic fan is located at an outer side of the left cylinder block and between two cylinder heads of the left cylinder block, and the other electronic fan is located at an outer side of the right cylinder block and between two cylinder heads of the right cylinder block.
